# EUROPÄISCHE PATENTANMELDUNG

(11) **EP 0 641 811 A2**
(43) Veröffentlichungstag der Anmeldung: **08.03.1995**
(21) Anmeldenummer: 94113860.4
(22) Anmeldetag: 05.09.1994
(51) Int. Cl.: C08G 8/28, C09D 11/10, C08G 16/00

(54) **Verfahren zur Herstellung von modifizierten Naturharzsäureestern**

(30) Priorität: 08.09.1993 DE 4330337
(71) Anmelder: HOECHST AKTIENGESELLSCHAFT, D-65926 Frankfurt am Main (DE)
(72) Erfinder: Bender, Albert, Dr., D-55130 Mainz (DE)

(57) **Zusammenfassung**

Verfahren zur Herstellung von geruchsarmen und hellgefärbten modifizierten Naturharzsäureestern, die als Bindemittelharze in Druckfarben für den Offsetdruck und den Illustrationstiefdruck geeignet sind, durch Umsetzung von
A) Naturharzsäuren mit
B) Phenolen,
C) Aldehyden,
D) Polyolen in Gegenwart von
E) Kondensationskatalysatoren, sowie gegebenenfalls mit
F) α,ß-ethylenisch ungesättigten Carbonsäuren oder deren Derivaten,
G) Fettsäuren oder Fettsäureverbindungen,
H) ethylenisch ungesättigten Monomeren oder
I) ethylenisch ungesättigten Kohlenwasserstoffharzen,
dadurch gekennzeichnet, daß man das bei der Herstellung dieser modifizierten Naturharzsäureester ab einer Reaktionstemperatur von 200 °C entstehende Wasser bis zu einer Temperatur von 300 °C kontinuierlich im Vakuum bei einem Druck von 0,1 bis 1000 mbar abdestilliert.

## Beschreibung

Die Erfindung betrifft ein Verfahren zur Herstellung von geruchsarmen und hellgefärbten modifizierten Naturharzsäureestern, die als Bindemittelharze für Druckfarben eingesetzt werden, in dem das durch Polykondensation entstehende Wasser mittels Destillation bei vermindertem Druck eliminiert wird.

Es ist Stand der Technik, modifizierte Naturharzsäureester als Bindemittelharze für Druckfarben, wie beispielsweise Farben für den Tief- oder Offsetdruck, zu verwenden. Diese Harze können durch Polykondensation von Naturharzsäuren mit Phenolen und Aldehyden, die auch als Resole oder Novolake vorliegen können, und Veresterung unter Einwirkung von Katalysatoren hergestellt werden, wobei gegebenenfalls als weitere Modifizierungsmittel vorzugsweise α,ß-ethylenisch ungesättigte Carbonsäuren oder deren Derivate, Fettsäureverbindungen, ethylenisch ungesättigte Monomere und ethylenisch ungesättigte Kohlenwasserstoffharze mitverwendet werden können.

Die Umsetzung dieser Komponenten wird in bekannter Weise durch Erhitzen von Komponentengemischen in den gewünschten Mengenverhältnissen sowohl im Eintopfverfahren als auch durch aufeinanderfolgendes Zudosieren einzelner Komponenten in eine auf Reaktionstemperatur gebrachte Komponentenvorlage und stufenweises Erwärmen von ca. 80 °C bis auf Temperaturen von 300 °C unter Abdestillieren des Reaktionswassers bis zum Erreichen der gewünschten Eigenschaften durchgeführt.

Es wurde auch bereits vorgeschlagen, das bei dieser Reaktion entstehende Wasser durch azeotrope Destillation zu entfernen. Damit lassen sich spezielle Harzeigenschaften einstellen, wie beispielsweise hohe Lösungsviskositäten in Toluol oder Mineralöl (P 43 08 109 und P 43 08 108) oder Gelstrukturen in Mineralöl (EP-A 0 548 506).

Es hat sich jedoch gezeigt, daß das Verfahren der Azeotropdestillation den Nachteil aufweist, daß das verwendete Schleppmittel sich im Verlauf der Reaktion mit Bestandteilen des Reaktionsgemisches, beispielsweise Harzölen, phenolischen Komponenten und Veresterungsmittel, anreichert, die zu Störungen bei der Wiederverwendung führen. Um diese zu vermeiden, muß dann das Schleppmittel vor erneuter Verwendung einem Reinigungsschritt, beispielsweise durch Destillation, unterzogen werden oder sogar gänzlich erneuert werden.

Es können auch Reste von Schleppmittel oder verunreinigtem Schleppmittel, die im Harz verbleiben, die Produkteigenschatten in unerwünschter Weise beeinträchtigen.

Auch kann es bei der Verwendung von Schleppmitteln, deren Siedetemperatur unterhalb der Reaktionstemperatur liegt, im technischen Maßstab problematisch werden, die für die Polykondensation erforderlichen hohen Temperaturen einzuhalten. Hier wird dann gewöhnlich durch verdampfendes überschüssiges inertes organisches Lösungsmittel die Reaktionstemperatur herabgesetzt, wodurch verlängerte Reaktionszeiten und zusätzlicher Energieaufwand entstehen.

Es hat sich weiterhin gezeigt, daß die nach dem Verfahren der Azeotropdestillation hergestellten Produkte einen nachteiligen Eigengeruch und eine hohe Farbzahl besitzen können, der ihren Einsatz beispielsweise im Lebensmittelverpackungsdruck unmöglich macht. Hier können aus hygienischen Gründen nur hellgefärbte und geruchsarme Produkte verwendet werden.

Der vorliegenden Erfindung lag somit die Aufgabe zugrunde, unter Vermeidung von Schleppmitteln einen vorteilhaften Verfahrensweg verfügbar zu machen, der zu verbesserten Produkten führt.

Diese Aufgabe konnte überraschenderweise dadurch gelöst werden, daß man bei der bekannten Herstellung modifizierter Naturharzsäureester auf das Verfahren der azeotropen Destillation des Reaktionswassers verzichtet und stattdessen das bei der Reaktion entstehende Wasser kontinuierlich im Vakuum entfernt.

Die vorliegende Erfindung betrifft also ein Verfahren zur Herstellung von geruchsarmen und hellgefärbten modifizierten Naturharzsäureestern durch Umsetzung von mindestens jeweils einer Verbindung aus den Substanzgruppen
A) Naturharze oder Naturharzsäuren,
B) einkernige oder mehrkernige Phenole,
C) Aldehyde oder Aldehydacetale und
D) Alkohole mit mindestens zwei Hydroxylgruppen in Gegenwart von
E) Kondensationskatalysatoren, sowie gegebenenfalls von weiteren Verbindungen aus den Substanzgruppen
F) α,ß-ethylenisch ungesättigte Carbonsäuren oder deren Derivate,
G) Fettsäuren oder Fettsäureverbindungen,
H) ethylenisch ungesättigte Monomere und
I) ethylenisch ungesättigte Kohlenwasserstoffharze,
dadurch gekennzeichnet, daß man das bei der Herstellung dieser modifizierten Naturharzsäureester ab einer Reaktionstemperatur von 200 °C, vorzugsweise 220 °C, insbesondere 240 °C, entstehende Wasser bis zu einer Temperatur von 300 °C, vorzugsweise 270 °C, insbesondere 260 °C, kontinuierlich im Vakuum bei einem Druck von 0,1 bis 1000 mbar, vorzugsweise 100-900 mbar, insbesondere 200-800 mbar, abdestilliert.

Im Vergleich zum Verfahren der Azeotropdestillation führt das erfindungsgemäße Verfahren der Vakuumdestillation bei gleicher Rezeptur zu Produkten mit vermindertem Eigengeruch und niedrigerer Farbzahl, so daß diese Produkte vorteilhaft auch im Lebensmittelsektor eingesetzt werden können.

Zur Herstellung modifizierter Naturharzsäureester für Druckfarben, insbesondere für den Offsetdruck und den Illustrationstiefdruck, kommen nach dem erfindungsgemäßen Verfahren als Ausgangskomponenten bevorzugt folgende Substanzgruppen A) bis I) infrage:
A) Naturharze oder Naturharzsäuren, vorzugsweise Kolophonium, Wurzelharz, Tallharz sowie disproportioniertes oder partiell hydriertes oder dimerisiertes Naturharz beliebiger Provenienz,
   oder Mischungen oder Umsetzungsprodukte der Verbindungen der Substanzgruppe A mit Verbindungen der Substanzgruppe F),
B) einkernige oder mehrkernige Phenole, vorzugsweise solche, die gegenüber Oxoverbindungen mehrfachfunktionell sind, insbesondere Phenol, (C₁-C₁₂)-Alkylphenole, Aryl- oder Aralkylphenole, Kresole, 1,3,5-Xylenole, Isopropyl-, p-tert.-Butyl-, Amyl-, Oktyl-, Nonylphenol, Diphenylolpropan, Phenylphenol, Cumylphenol, sowie deren Additionsprodukte aus Phenolen und ethylenisch ungesättigten Monomeren, vorzugsweise α-Methylstyrol, α-Chlor-Styrol, Vinyltoluol, Cyclopentadien,
C) Aldehyde oder Aldehydacetale, vorzugsweise aliphatische (C₁-C₇)-Aldehyde, insbesondere Formaldehyd in seinen verschiedenen monomeren, oligomeren und polymeren Formen, Acetaldehyd, Butyraldehyd, Isuburyraldehyd, ferner Benzaldehyd, Furfurol, Glyoxal,
   oder anstelle von Verbindungen aus den Substanzgruppen B und C oder anteilig mit diesen aus Verbindungen der Substanzgruppen B) und C) separat hergestellte Phenolresole,
D) mindestens zwei Hydroxylgruppen enthaltende Veresterungsmittel zur Veresterung der Umsetzungsprodukte aus Phenolharzen und Verbindungen der Substanzgruppe A), vorzugsweise polyfunktionelle Alkohole, insbesondere bifunktionelle, beispielsweise Glykole, oder trifunktionelle, beispielsweise Trimethylolethan, Trimethylolpropan, Glycerin, oder tetrafunktionelle, beispielsweise Pentaerythrit, oder pentafunktionelle, beispielsweise dimerisiertes Trimethylolpropan, oder hexafunktionelle Alkohole, beispielsweise dimerisiertes Pentaerythrit,
E) Kondensationskatalysatoren bzw. Salzbildner für die Resolbildung aus Phenolen und Aldehyden oder Aldehydacetalen sowie für die Veresterungsreaktionen bzw. Resinatbildung, vorzugsweise Oxide, Hydroxide, Carbonate, Acetate von Metallen, insbesondere von Calcium, Magnesium, Zink, Natrium, Kalium, ferner Amine, beispielsweise Triethylamin,
F) α,β-ethylenisch ungesättigte Carbonsäuren, beispielsweise Acrylsäure, Methacrylsäure, Maleinsäure, Fumarsäure, Crotonsäure, Itakonsäure, Zimtsäure sowie deren Derivate beispielsweise Ester und Amide, vorzugsweise Anhydride, insbesondere Maleinsäureanhydrid,
G) Fettsäuren, vorzugsweise tierische, pflanzliche oder durch Raffination gewonnene Fettsäuren, ferner Fettverbindungen, beispielsweise Fette und Fettsäureglycerinester, insbesondere in Form von vegetabilischen oder tierischen Ölen, beispielsweise Tallöl, Baumwollsaatöl, Sojaöl, Leinöl, Holzöl, Fischöl, Kokosfett,
H) ethylenisch ungesättigte Monomere, insbesondere Styrol, α-Methylstyrol, Inden,
I) ethylenisch ungesättigte Kohlenwasserstoffharze, vorzugsweise Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol,
oder Copolymerisate von Verbindungen der Substanzgruppe I mit Verbindungen der Substanzgruppe A).

Die Durchführung des Verfahrens erfolgt in einem Reaktor, beispielsweise einem üblichen Druckkessel, der mit Rührer, Heizung, Thermostatisierung, Zulaufvorrichtung, Rückflußkühler und Destilationsvorrichtung ausgerüstet ist. Beispielsweise wird zur Herstellung eines Phenolharz-modifizierten Naturharzsäureesters so verfahren, daß zum geschmolzenen Naturharz Veresterungsmittel, Kondensationskatalysator und Resolkomponenten zugegeben werden. Dann wird im Temperaturbereich zwischen 110 und 130 °C die Resolbildung durchgeführt, die auch unter Druck erfolgen kann. Nach Beendigung wird entstandenes Wasser durch Erhitzen bis 200 °C durch Destillation bei Normaldruck entfernt. Anschließend wird die Temperatur auf Werte zwischen 200 und 300 °C erhöht, wobei ab einer Temperatur von 200 °C das entstehende Reaktionswasser im Vakuum abdestilliert wird. Die Säurezahl des Gemisches beträgt zu Beginn der Vakuumdestillation 130 bis 70, vorzugsweise 120 bis 80 mg KOH/g Harz, ermittelt nach DIN 52 402. Die Reaktion kann dann durch Bestimmung der üblichen Kennzahlen, wie beispielsweise der Säurezahl oder der Viskosität verfolgt werden. Wenn der gewünschte Wert erreicht ist, wird die Reaktion beendet.

Da sich Naturharze verschiedener Provenienz hinsichtlich ihrer Zusammensetzung unterscheiden können, können bei gleicher Rezeptur auch unterschiedliche Produkteigenschaften beispielsweise bezüglich der Viskosität resultieren. Die Rezeptur kann dann jedoch durch geringe Änderung der Komponentenkonzentration dem jeweiligen Naturharz angepaßt werden. Gewöhnlich sind für diese Optimierungsreaktion nur wenige Versuche notwendig.

Bis auf den günstigeren Eigengeruch und die niedrigere Farbzahl entsprechen die Eigenschaften sowie die Verwendung der nach dem erfindungsgemäßen Verfahren herstellbaren modifizierten Naturharzsäureester weitgehend den in P 43 11 127.0 beschriebenen, wenn Naturharzsäuren mit Veresterungsmittel, Phenolen, Aldehyden und Calcium-Verbindungen und gegebenenfalls Kohlenwasserstoffharzen, den in P 43 08 108.8 beschriebenen, wenn Naturharzsäuren mit Veresterungsmittel, Phenolen, Aldehyden und Magnesium-Verbindungen und gegebenenfalls Kohlenwasserstoffharzen und Fettsäuren und den in EP-A 0 548 506 beschriebenen, wenn mit α,ß-olefinisch ungesättigten Carbonsäuren modifizierte Naturharzsäuren mit Veresterungsmittel, Phenolen, Aldehyden, Magnesium-Verbindungen und gegebenenfalls Kohlenwasserstoffharz und Fettsäuren umgesetzt werden.

Die erfindungsgemäß hergestellten Produkte werden als Bindemittelharze in Druckfarben für den Offset- und Illustrationstiefdruck, vorzugsweise im Lebensmittelverpackungsdruck, eingesetzt.

Die Farbzahlen der Festharze werden als Jodfarbzahl (JFZ) nach DIN 6162 bestimmt.

Zur Ermittlung des Eigengeruchs wird jeweils eine Harzprobe pulverisiert und das Pulver 24 Stunden in einem verschlossenen Gefäß aufbewahrt. Nach Öffnen wird der Geruch klassifiziert.

Die Erfindung wird durch die nachstehenden Beispiele erläutert.

### Vergleichsbeispiel 1

Herstellung eines Phenolharz-modifizierten Naturharzsäureesters gemäß EP-A 0 548 506.

In einem mit Wärmeträgeröl beheizten 2l-Druckgefäß mit Rührwerk, Thermometer und Einfüllrohr werden unter N2-Atmosphäre 790 g handelsübliches chinesisches Kolophonium, das auch als Naturharz oder Naturharzsäure bezeichnet wird, geschmolzen, und der 160 °C heißen Harzschmelze 38 g Maleinsäureanhydrid zudosiert, wobei eine exotherme Reaktion einsetzt, nach deren Abklingen das Reaktionsgemisch noch 1 Stunde bei 160 °C gehalten wird. Anschließend werden der Mischung bei 160 °C 414 g Nonylphenol, 100 g Pentaerythrit und 9 g Magnesiumoxid zugesetzt, die Temperatur auf 110 °C erniedrigt, 102 g Paraformaldehyd zugegeben, das Gefäß druckdicht verschlossen und die Mischung 1 Stunde bei 110 °C gerührt. Danach wird die Temperatur innerhalb von 20 Minuten auf 130 °C erhöht, wobei das Einsetzen der Phenolresolbildung unter Wasserabspaltung beginnt. Die Reaktionstemperatur wird weitere 2 Stunden bei 130 °C gehalten, das Gefäß vorsichtig auf Normaldruck entspannt, wobei Wasser über einen aufgesetzten Kühler aus der heterogenen Schmelze abdestilliert. Nachdem diese Destillation zum Stillstand gekommen ist, wird die Temperatur auf 265 °C gesteigert, wobei ab einer Temperatur von 200 °C entstehendes Wasser mittels Xylol azeotrop abdestilliert wird. Nachdem die Säurezahl auf 23 mg KOH/g Harz abgefallen ist, wozu eine Veresterungsdauer von ca. 10 Stunden notwendig ist, wird die Azeotropdestillation unterbrochen und tüchtige Anteile während 10 Minuten im Vakuum bei 100 mbar abdestilliert. Es werden 1235 g Harz vom Erweichungspunkt 135 °C und der Säurezahl 20 mg KOH/g Harz erhalten. Eine 40 Gew.-%ige Lösung des Harzes in einem hochsiedendem Mineralöl mit dem Siedebereich 240-270 °C und dem Anilinpunkt von 72 °C weist bei 23 °C eine Viskosität von 920 dPa·s auf und eine 40 Gew.-%ige Lösung in Leinöl eine Viskosität von 2600 dPa·s, jeweils gemessen mit dem Laray-Fallstabviskosimeter bei einem Schergefälle von 100 s⁻¹. 1 Teil Harz, gelöst in 4,5 Teilen des vorstehend verwendeten Mineralöls, bildet bei 23 °C eine stabile klare Lösung. Das Schleppmittel Xylol ist durch Pentaerythrit und Nonylphenol verunreinigt und muß vor einer erneuten Verwendung durch fraktionierte Destillation gereinigt werden.

Die Jodfarbzahl des Festharzes beträgt 110. Die pulverisierte Probe besitzt einen unangenehmen terpentinartigen Geruch.

### Beispiel 1

In einem mit Wärmeträgeröl beheizten 2l-Druckgefäß mit Rührwerk, Thermometer und Einfüllrohr werden unter N2-Atmosphäre 790 g handelsübliches chinesisches Kolophonium geschmolzen, und der 160 °C heißen Harzschmelze 38 g Maleinsäureanhydrid zudosiert, wobei eine exotherme Reaktion einsetzt, nach deren Abklingen das Reaktionsgemisch noch 1 Stunde bei 160 °C gehalten wird. Anschließend werden der Mischung bei 160 °C 414 g Nonylphenol, 100 g Pentaerythrit und 9 g Magnesiumoxid zugesetzt, die Temperatur auf 110 °C erniedrigt, 102 g Paraformaldehyd zugegeben, das Gefäß druckdicht verschlossen und die Mischung 1 Stunde bei 110 °C gerührt. Danach wird die Temperatur innerhalb von 20 Minuten auf 130 °C erhöht, wobei das Einsetzen der Phenolresolbildung unter Wasserabspaltung beginnt. Die Reaktionstemperatur wird weitere 2 Stunden bei 130 °C gehalten, das Gefäß vorsichtig auf Normaldruck entspannt, wobei Wasser über einen aufgesetzten Kühler aus der heterogenen Schmelze abdestilliert. Nachdem diese Destillation zum Stillstand gekommen ist, wird die Temperatur auf 265 °C gesteigert, wobei ab einer Temperatur von 200 °C, wobei die Säurezahl auf 95 mg KOH/g Reaktionsgemisch abgesunken ist, entstehendes Wasser mittels Vakuum bei 400 mbar abdestilliert wird. Nachdem die Säurezahl nach einer Verdampfungsdauer von ca. 10 Stunden auf 23 mg KOH/g Harz abgefallen ist, wird die Vakuumdestillation beendet. Es werden 1228 g Harz vom Erweichungspunkt 135 °C und der Säurezahl 20 mg KOH/g Harz erhalten. Eine 40proz. Lösung des Harzes in einem hochsiedendem Mineralöl mit dem Siedebereich 240-270 °C und dem Anilinpunkt von 72 °C weist bei 23 °C eine Viskosität von 950 dPa·s auf und eine 40proz. Lösung in Leinöl eine Viskosität von 2600 dPa·s, jeweils gemessen mit dem Laray-Fallstabviskosimeter bei einem Schergefälle von 100 s⁻¹. 1 Teil Harz, gelöst in 5 Teilen des vorstehend verwendeten Mineralöls, bildet bei 23 °C eine stabile klare Lösung.

Die Jodfarbzahl des Festharzes beträgt 85. Die pulverisierte Probe besitzt einen nur noch schwach wahrnehmbaren und milden Geruch.

### Vergleichsbeispiel 2

Herstellung eines Phenolharz-modifizierten Naturharzsäureesters gemäß P 43 08 108.

In einem mit Wärmeträgeröl beheizten 2l-Druckgefäß mit Rührwerk, Thermometer und Einfüllrohr werden unter N2-Atmosphäre 600 g handelsübliches chinesisches Kolophonium, 83 g Nonylphenol, 63 g Diphenylolpropan, 53 g Glycerin und 10 g Calciumhydroxid sowie 52 g Paraformaldehyd bei 140 °C und einem Druck von 2 bar kondensiert. Dann wird das Gefäß vorsichtig auf Normaldruck entspannt, wobei Wasser über einen aufgesetzten Kühler aus der heterogenen Schmelze abdestilliert. Nachdem diese Destillation zum Stillstand gekommen ist, wird die Temperatur auf 250 °C gesteigert, wobei ab einer Temperatur von 200 °C entstehendes Wasser mittels Xylol azeotrop abdestilliert wird. Nach 4 Stunden wird die Azeotropdestillation unterbrochen und flüchtige Anteile während 10 Minuten im Vakuum bei 100 mbar abdestilliert. Es werden 735 g Harz vom Erweichungspunkt 145 °C und der Säurezahl 24 mg KOH/g Harz erhalten. Eine 25 Gew.-%ige Lösung in Toluol weist eine Viskosität von 22 mPa·s auf.

Die Jodfarbzahl des Festharzes beträgt 115. Die pulverisierte Probe besitzt einen unangenehmen terpentinartigen Geruch.

### Beispiel 2

In einem mit Wärmeträgeröl beheizten 2l-Druckgefäß mit Rührwerk, Thermometer und Einfüllrohr werden unter N2-Atmosphäre 600 g handelsübliches chinesisches Kolophonium, 83 g Nonylphenol, 63 g Diphenylolpropan, 53 g Glycerin und 10 g Calciumhydroxid sowie 52 g Paraformaldehyd bei 140 °C und einem Druck von 2 bar kondensiert. Dann wird das Gefäß vorsichtig auf Normaldruck entspannt, wobei Wasser über einen aufgesetzten Kühler aus der heterogenen Schmelze abdestilliert. Nachdem diese Destillation zum Stillstand gekommen ist, wird die Temperatur auf 250 °C gesteigert, wobei ab einer Temperatur von 200 °C entstehendes Wasser mittels Vakuum bei 700 mbar abdestilliert wird. Die Säurezahl beträgt zu Beginn der Vakuumdestillation 108 mg KOH/g Harzgemisch. Nach 4 Stunden wird die Vakuumdestillation abgebrochen. Es werden 731 g Harz vom Erweichungspunkt 145 °C und der Säurezahl 31 mg KOH/g Harz erhalten. Eine 25 Gew.-%ige Lösung in Toluol weist eine Viskosität von 13 mPa·s auf.

Die Jodfarbzahl des Festharzes beträgt 90. Die pulverisierte Probe besitzt einen nur noch schwach wahrnehmbaren und milden Geruch.

### Vergleichsbeispiel 3

Herstellung eines phenolharzmodifizierten Naturharzsäureesters gemäß P 43 08 109.

In einem mit Wärmeträgeröl beheizten 2l-Druckgefäß mit Rührwerk, Thermometer und Einfüllrohr werden unter N2-Atmosphäre 527 g amerikanisches Tallharz, 237 g Nonylphenol, 20 g Diphenylolpropan, 54 g Pentaerythrit und 6 g Magnesiumoxid sowie 68 g Paraformaldehyd bei 140 °C und einem Druck von 2 bar kondensiert. Dann wird das Gefäß vorsichtig auf Normaldruck entspannt, wobei Wasser über einen aufgesetzten Kühler aus der heterogenen Schmelze abdestilliert. Nachdem diese Destillation zum Stillstand gekommen ist, wird die Temperatur auf 260 °C gesteigert, wobei ab einer Temperatur von 200 °C entstehendes Wasser mittels Xylol azeotrop abdestilliert wird. Nach 4 Stunden wird die Azeotropdestillation unterbrochen und flüchtige Anteile während 10 Minuten im Vakuum bei 100 mbar abdestilliert. Es werden 717 g Harz vom Erweichungspunkt 130 °C und der Säurezahl 22 mg KOH/g Harz erhalten. Eine 35 Gew.-%ige Lösung in Mineralöl vom Siedebereich 240 bis 270 °C weist eine Viskosität von 40 dPa·s auf. Eine Lösung von 1 Teil Harz und 9 Teilen des Mineralöls ist bei 23 °C stabil und klar.

Die Jodfarbzahl des Festharzes beträgt 165. Die pulverisierte Probe besitzt einen unangenehmen terpentinartigen Geruch.

### Beispiel 3

In einem mit Wärmeträgeröl beheizten 2l-Druckgefäß mit Rührwerk, Thermometer und Einfüllrohr werden unter N2-Atmosphäre 527 g amerikanisches Tallharz, 237 g Nonylphenol, 20 g Diphenylolpropan, 54 g Pentaerythrit und 6 g Magnesiumoxid sowie 68 g Paraformaldehyd bei 140 °C und einem Druck von 2 bar kondensiert. Dann wird das Gefäß vorsichtig auf Normaldruck entspannt, wobei Wasser über einen aufgesetzten Kühler aus der heterogenen Schmelze abdestilliert. Nachdem diese Destillation zum Stillstand gekommen ist, wird die Temperatur auf 260 °C gesteigert, wobei ab einer Temperatur von 200 °C entstehendes Wasser mittels Vakuum bei 700 mbar abdestilliert wird. Die Säurezahl beträgt zu Beginn der Vakuumdestillation 98 mg KOH/g Harzgemisch. Nach 4 Stunden wird die Vakuumdestillation abgebrochen. Es werden 715 g Harz vom Erweichungspunkt 130 °C und der Säurezahl 24 mg KOH/g Harz erhalten. Eine 35 Gew.-%ige Lösung in Mineralöl vom Siedebereich 240 bis 270 °C weist eine Viskosität von 40 dPa·s auf. Eine Lösung von 1 Teil Harz und 9 Teilen des Mineralöls ist bei 23 °C stabil und klar.

Die Jodfarbzahl des Festharzes beträgt 130. Die pulverisierte Probe besitzt einen nur noch schwach wahrnehmbaren und milden Geruch.

## Patentansprüche

1. Verfahren zur Herstellung von geruchsarmen und hellgefärbten modifizierten Naturharzsäureestern durch Umsetzung von mindestens jeweils einer Verbindung aus den Substanzgruppen
A) Naturharze oder Naturharzsäuren,
B) einkernige oder mehrkernige Phenole,
C) Aldehyde oder Aldehydacetale und
D) Alkohole mit mindestens zwei Hydroxylgruppen im Gegenwart von
E) Kondensationskatalysatoren sowie gegebenenfalls von weiteren Verbindungen aus den Substanzgruppen
F) α,ß-ethylenisch ungesättigte Carbonsäuren oder deren Derivate,
G) Fettsäuren oder Fettsäureverbindungen,
H) ethylenisch ungesättigte Monomere und
I) ethylenisch ungesättigte Kohlenwasserstoffharze,
dadurch gekennzeichnet, daß man das bei der Herstellung dieser modifizierten Naturharzsäureester ab einer Reaktionstemperatur von 200 °C entstehende Wasser bis zu einer Temperatur von 300 °C kontinuierlich im Vakuum bei einem Druck von 0,1 bis 1000 mbar abdestilliert.

2. Verfahren nach Anspruch 1, dadurch gekennzeichnet, daß das Wasser ab einer Reaktionstemperatur von 220 °C bei einem Druck von 100 bis 900 mbar bis zu einer Temperatur von 270 °C kontinuierlich abdestilliert wird.

3. Verfahren nach Anspruch 1, dadurch gekennzeichnet, daß das Wasser ab einer Reaktionstemperatur von 240 °C bei einem Druck von 200 bis 800 mbar bis zu einer Temperatur von 260 °C kontinuierlich abdestilliert wird.

4. Verfahren nach Anspruch 1, dadurch gekennzeichnet, daß das Wasser bei Erreichen einer Säurezahl von 130 bis 70 mg KOH/g Harz im Vakuum abdestilliert wird.

5. Verfahren nach einem der Ansprüche 1 bis 4, dadurch gekennzeichnet, daß man Naturharzsäuren mit α,ß-ethylenisch ungesättigten Carbonsäuren oder deren Derivaten, Phenolen und Aldehyden, die auch als Resole oder Novolake vorliegen können, Veresterungsmittel und Magnesiumverbindungen, sowie gegebenenfalls mit Fettsäuren oder Fettsäureverbindungen und ethylenisch ungesättigten Kohlenwasserstoffharzen umsetzt.

6. Verfahren nach einem der Ansprüche 1 bis 4, dadurch gekennzeichnet, daß man Naturharzsäuren mit Phenolen und Aldehyden, die auch als Resole oder Novolake vorliegen können, Veresterungsmittel und Magnesiumverbindungen, sowie gegebenenfalls mit Fettsäuren oder Fettsäureverbindungen und/oder ethylenisch ungesättigten Kohlenwasserstoffharzen umsetzt.

7. Verfahren nach einem der Ansprüche 1 bis 4, dadurch gekennzeichnet, daß man Naturharzsäuren mit Phenolen und Aldehyden, die auch als Resole oder Novolake vorliegen können, Veresterungsmittel und Calcium- oder Zinkverbindungen, sowie gegebenenfalls mit ethylenisch ungesättigten Monomeren und ethylenisch ungesättigten Kohlenwasserstoffharzen umsetzt.

8. Verwendung der nach einem der Ansprüche 1-7 hergestellten Harze als Bindemittelharze in Druckfarben für den Offsetdruck und den Illustrationstiefdruck.
